# EUROPEAN PATENT APPLICATION

(11) **EP 3 321 843 A1**
(43) Date of publication of application: **16.05.2018**
(21) Application number: 16198012.3
(22) Date of filing: 09.11.2016
(51) Int. Cl.: G06K 9/00

(54) **A CENTRALIZED TRAFFIC CONTROL SYSTEM, AND A METHOD IN RELATION WITH THE SYSTEM**

(71) Applicant: Bombardier Transportation GmbH, 10785 Berlin (DE)
(72) Inventor: MILIVOJEVIC, Mladen, Nis (RS)
(74) Representative: Bjerkéns Patentbyrå KB (Stockholm)

(57) **Abstract**

A centralized traffic control (CTC) system (2) comprising a CTC unit (4) and at least one display panel (6) constituting a large CTC screen (8), configured to display an overview of traffic in a specified geographical area on a map (10) to an operator, wherein interactive real-time traffic information is displayed at the screen comprising a gesture detecting device to detect operator's hand (14) gestures and gesture related positions, transforming the results to a data representation, and a gesture identification unit (18) configured to compare the data representation to data representations of a set of valid hand gestures and identify valid hand gestures.The CTC unit (4) is configured to determine an icon (20) related to the identified valid hand gesture, wherein said icons being easily distinguishable from each other, and to generate an icon control signal (30) including data related to said determined icon and to a position related to the identified valid hand gesture, wherein the icon control signal (30) is applied to said at least one display panel (6) to display the determined icon on the screen (8) at a position related to the position of the detected valid gesture, and wherein the CTC unit (4) is configured to initiate interactive functionality related to the displayed icon, and to the real-time traffic information displayed at the screen.

## Description

### Technical field

The present disclosure relates to a centralized traffic control (CTC) system, and a method in relation with the system, and in particular a gesture controlled interactive CTC system.

### Background

Traffic control systems are there to help control the traffic flow, with many operators monitoring and taking actions when necessary. Operators of the traffic control systems normally use a keyboard and a mouse to interact. Current user interface and work setup consist of many usability issues that can be improved in order to increase operator's efficiency and productivity in controlling the traffic.

A train driver will depart on time by following a timetable plan, coordinating with the operators at the traffic control centre. The software system that tracks and controls the traffic is called a Centralized Traffic Control (CTC) system used by operators on a daily basis. The purpose of this system is to safely manage and monitor traffic in rail transportation.
Operators (users) of the CTC system are called dispatchers, who have certain level of responsibility to monitor and control rail traffic. This implies careful observing, taking actions in advance, while other trains await attention. The user interface of the system plays an important role in establishing safe and smooth traffic flow. The interaction with CTC is normally today limited to a keyboard and a mouse.

Current user interface and interaction is functional in a sense that it consists all necessary functionalities for dispatchers to control the traffic. However, the way how they operate is not the most efficient one. For instance, requesting detailed map involves memorizing numbers, typing these numbers on the keyboard and rearranging the window to the optimal, visible position.

One of the main problems that dispatchers are facing with is the memory workload. This implies constant attention, concentration and in some cases, memorizing detailed information. It can affect dispatchers' performance and efficiency in controlling. Systems with lack of usability can cause high cognitive workload, which can create stress and health disorder.

Current Centralized Traffic Control requires further development to increase productivity and efficiency in controlling the rail traffic. The general object of the present invention is to improve the interaction with the CTC system. A further object is to resolve usability issues by e.g. adjusting some elements in the user interface.

Operating with Centralized Traffic Control is a dynamic process, which means dealing with the complex system. Herein, dynamic process refers to spontaneous changes in the systems state by both internal and external impacts. It can affect dispatchers' ability to understand, interpret information, control, and to influence present as well as future situations of the traffic.

The CTC system's user interface (UI) consists of a certain geographical area that dispatchers can choose before logging in to the system. This geographical area represents a map of rail tracks, signals, stations, crossings and other objects. The map shows real-time information from the rail infrastructure. However, the position of the map is static and cannot be moved in the window.

Every object signifies the current state. For instance, a red track (line) shows the location of the train. As the train is moving, the next part of the rail track gets highlighted with red colour. Some objects change the appearance or location. For instance, rail crossings (intersections) can change the position from left to right and vice versa. Most of the indicators have continuous changes such as blinking, changing colours, etc. All indications require dispatcher's full attention.
The UI elements are minimal (on the top/bottom panels) giving space to focus on the actual traffic (map). The UI elements are panels, buttons, fields, etc.

Before having the present user interface it consisted of a map and a command line prompt. The present user interface, provided with panels on the top/bottom part of the screen, has not changed for a long time, due to its stability in functioning and user's habit when interacting.
The map however is changed almost every day and it is different for each client. Each client has specific requirements and specification of their signals and indicators. The map consists of SVG (scalable vector graphics) images that change appearance or colour according to the signal received from the infrastructure.

As previously mentioned, the interaction with the CTC system is done with the use of a keyboard and a mouse.
Dispatchers can take control over an object by clicking on it with a mouse and choosing the right command (i.e. blocking the track - restricting traffic flow). If more details of a map are needed, the dispatcher has to find the code of the wanted portion of a map and request for it. When the code is typed with the keyboard (i.e. BLD TS628) and a command gets requested, a new window appears with detailed portion of the map.
Since there are many different commands for each object or functionality, dispatchers can optionally request for commands using both a keyboard and a mouse. Almost the same command can be achieved with both modalities. The differences between these two means of interaction are explained by an example of requesting for detailed portion of a map (see Table 1.).

**Table 1**

| Steps | Mouse | Keyboard |
|---|---|---|
| 1 | Point with the cursor to the object | Find exact number of an object on the screen |
| 2 | Right click to open a menu with commands | Type the command code BLD followed by object's number |
| 3 | Navigate to the BLD command | Press Enter to open a new window of a detailed map |
| 4 | Click OK to open a new window of a detailed map | - |
| Flaws | Time consuming and additional steps required | Increases in cognitive workload (memorizing each command) |

This table illustrates the differences between a mouse and a keyboard when requesting for a detailed map.

Dispatchers also have a custom made keyboard adapted to the CTC system. The keyboard has function keys replaced with custom ones that match the initials of a specific command.

Each dispatcher has an overview of a smaller geographical area (i.e. south area from a big city) on eight (26.9 inch) monitors attached slightly higher from the desk as a 4x2 grid.
In addition, other displays are there for additional information, as well as a keyboard and a mouse for interaction. A telephone plays an important role in managing traffic as dispatchers are contacting train drivers and technicians over it.

In the following and under separate headings some drawbacks with the presently applied interactive CTC system will be discussed.

### Finding a mouse cursor on eight large displays is sometimes difficult.

The mouse cursor is very small on any screen size and for some users it can be challenging to find it when it is needed the most.

Moreover, dispatchers have much harder time to find the mouse cursor on screens that make 220 inch (5.5 metre) diagonally in total. This issue is time consuming resulting in low performance and inefficient controlling of the traffic.

### It is hard to reach details on the map.

From time to time, dispatchers have to focus on one specific area (section) and monitor detailed information (e.g. signals in the infrastructure).

To see these details, the second layer of a map has to be requested. As seen in table 1, there are two ways of doing this, with a mouse or with a keyboard. Both will do the same work, however, one is time consuming and the other increases cognitive workload. Thus, there is a need for intuitive interaction of this functionality.

### Limited area visible on the screen.

Each dispatcher focuses on one geographical area, and therefore, can see only that part of a map. There is no efficient way to see the surroundings, except exiting the CTC software and choosing different area from start. Giving the option for the dispatchers to see the surroundings could increase efficiency of the traffic control and prevent potential risks.

The purpose of the present invention is to improve the interaction and user interface.

The highlighted issues are limited interaction with keyboard and mouse; the mouse cursor is not always in place and is hard to find, and dispatchers use only keyboard or only mouse - thus, there is a lack of multimodal interaction.

On-time train departure, arrival and safety of all the passengers depend on many factors. One of them implies efficient monitoring and controlling the rail traffic flow. Hence, operators of the centralized traffic control need to have an effective, intuitive and natural way of monitoring and controlling the system.
With references to the discussion above the general object of the present invention is to improve the interactivity between a user (a dispatcher) and the CTC system in order to achieve faster, natural and intuitive control of the CTC system.

### Summary

The above-mentioned object is achieved by the present invention according to the independent claim.

Preferred embodiments are set forth in the dependent claims.

According to a first aspect, the invention relates to a centralized traffic control (CTC) system (2) comprising a CTC unit (4) and at least one display panel (6) constituting a large CTC screen (8), configured to display an overview of traffic in a specified geographical area on a map (10) to an operator, wherein interactive real-time traffic information is displayed at the screen.

The CTC system (2) comprises,
- a gesture detecting device (12) configured to detect an operator's hand, (14) gestures and gesture related positions, in a three dimensional (3D) sensory space (16) provided in front of the screen (8), the detected hand gesture and related position being transformed to a data representation,
- a gesture identification unit (18) configured to compare said data representation of the detected hand gesture to data representations of a set of valid hand gestures, wherein said valid hand gestures comprises a panning gesture, a hovering gesture, a zooming gesture, and a cursor gesture, wherein the gesture identification unit (18) is configured, as a result of the comparison, to identify, a valid hand gesture,
- the CTC unit (4) is configured to determine an icon (20) related to the identified valid hand gesture, wherein the icon is one of a panning icon (22), a hovering icon (24), a zooming icon (26) and a cursor icon (28), and wherein the icons being easily distinguishable from each other, and to generate an icon control signal (30) including data related to the determined icon and to a position related to the identified valid hand gesture, wherein the icon control signal (30) is applied to the at least one display panel (6) to display said determined icon on the CTC screen (8) at a specific position related to the gesture related position, and wherein the CTC unit (4) is configured to initiate interactive functionality related to the displayed icon and to the real-time traffic information is displayed at the screen.

According to a second aspect the invention relates to A method of interacting with a centralized traffic control (CTC) system (2) comprising a CTC unit (4) and at least one display panel (6) constituting a large CTC screen (8), configured to display an overview of traffic in a specified geographical area on a map (10) to an operator, wherein interactive real-time traffic information is displayed at the screen.

The method comprises,
- detecting an operator hand gesture, by a gesture detection device configured to detect operator hand gestures in a three dimensional (3D) sensory space provided in front of said CTC screen, and a gesture related position, the detected hand gesture being transformed to a data representation,
- comparing, in a gesture identification unit, said data representation of said detected operator hand gesture to data representations of a set of valid hand gestures, wherein said valid hand gestures comprises a panning gesture, a hovering gesture, a zooming gesture, and a cursor gesture,
- identifying, as a result of said comparison, in said gesture identification unit, a valid hand gesture,
- determining an icon related to the identified valid hand gesture, wherein the icon is one of a panning icon, a hovering icon, a zooming icon and a cursor icon, and wherein said icons being easily distinguishable from each other,
- generating an icon control signal including data related to said determined icon and to a position related to the identified valid hand gesture,
- displaying said determined icon on said CTC screen at a position related to the gesture related position,
- initiating, by said CTC control unit, interactive functionality related to the displayed icon and to the real-time traffic information displayed at the screen.

According to the present invention, gesture-based interaction is introduced for a centralized traffic control system to improve the operation and in particular to solve the identified usability issues, and to bring intuitive and fast way of performing certain tasks.
Various gestures are designed such as panning, zooming and hovering the map using a gesture detection device, which enables intuitive interaction.
It eliminates finding mouse cursor on very large screens, which can be time consuming and can require additional steps to accomplish. Specifically designed gestures enable faster request of detailed information that reduces cognitive workload of the operator (memorizing unnecessary information). It also provides better overview of the map surroundings.

Gesture-based interaction is usually performed in the air, slightly higher from a natural position of our hands while sitting in front of a desk. It is also possible to perform the gesture-based interaction from a sitting position.

One important aspect of the present invention is that each identified valid gesture includes the display of an easily distinguishable icon, e.g. with regards to different colouring and shape, for perceiving changes from one gesture to another.

### Brief description of the drawings

Figure 1 is a schematic block-diagram illustrating the CTC system according to the present invention.
Figure 2 shows an example of a panning icon.
Figure 3 shows an example of a hovering icon.
Figure 4 shows an example of a cursor icon.
Figure 5 is schematic front view of the CTC screen according to the present invention.
Figure 6 is a flow diagram illustrating the method according to the present invention.

### Detailed description

The centralized traffic control (CTC) system will now be described in detail with references to the appended figures. Throughout the figures the same, or similar, items have the same reference signs. Moreover, the items and the figures are not necessarily to scale, emphasis instead being placed upon illustrating the principles of the invention.

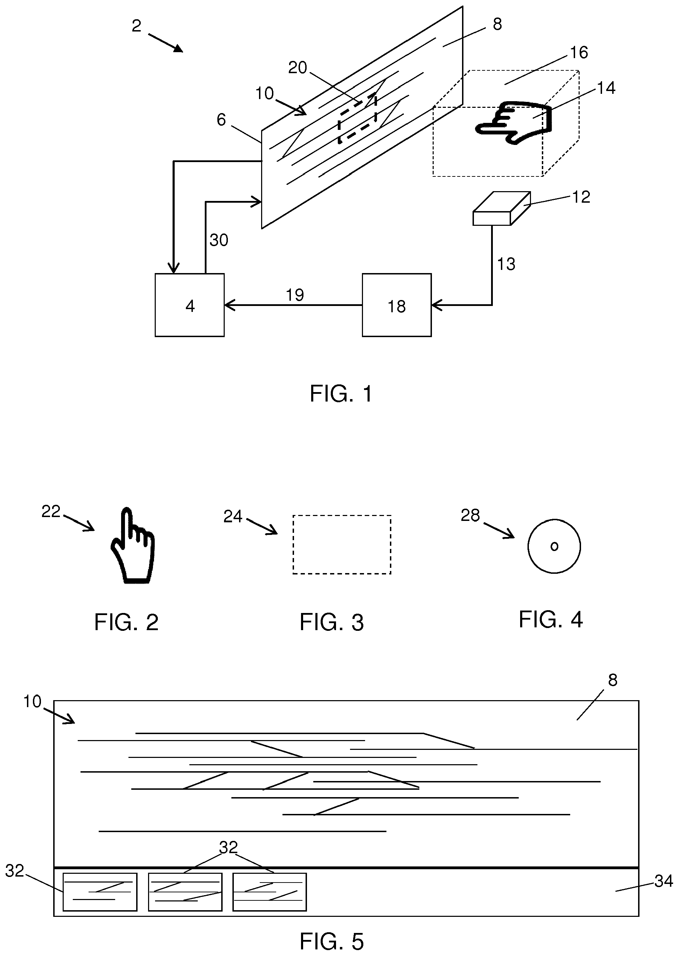

First with references to the schematic illustration in figure 1, a centralized traffic control (CTC) system 2 is provided, comprising a CTC unit 4 and at least one display panel 6 constituting a large CTC screen 8.
In one embodiment, the CTC screen is 8 at least 220 inch (5.5 metre) diagonally but sometimes even larger. It would be possible to have only one display panel 6, but often a plurality of panels are mounted together to constitute the CTC screen. In one example, 8 display panels are used mounted together in a 2x4 grid, i.e. two rows with four panels in each row.

The CTC is configured to display an overview of traffic in a specified geographical area on a map 10 to an operator, wherein interactive real-time traffic information is displayed at the screen.

Furthermore, the CTC system 2 comprises a gesture detecting device 12 configured to detect operator hand 14 gestures and gesture related positions, in a three dimensional (3D) sensory space 16 provided in front of said CTC screen 8, the detected hand gesture and related position being transformed to a data representation. The data representation is included in a gesture-detecting signal 13 that is generated by the gesture-detecting device 12.

The CTC system 2 also comprises a gesture identification unit 18 configured to compare the data representation, obtained from the received gesture-detecting signal 13, of the detected operator hand gesture to data representations of a set of valid hand gestures. The gesture-detection device and the gesture identification unit will be separately discussed below.

Current setup of the gesture detection device includes placing the device in between the user and the screen, on a flat surface (a desk) with sensors facing upwards. The interaction sensory space 16 is above the device, with hands facing towards the screen. This setup is the most common one because it provides a stable placement of the device (no distracting movements), gives some space to interact without interfering with other modalities or objects and it gives a natural feeling to the user when interacting (a feeling of touching/grabbing user interface elements in front of the screen).

An alternative placement of the detection device might accommodate better use of the implemented gestures with additional support. Placing the detection device in front of a chair's armrest would improve the ergonomics (reduce pain in the arm), however, it limits the natural interaction and provides one hand use of the device. It is also most likely that the user might perform unintentional interactions when standing up or sitting down on the chair.

In addition to the gesture-based interaction also a keyboard and a mouse are available to enable many options for the dispatcher - however, these are not shown in figure 1.

The set of valid hand gestures comprises a panning gesture, a hovering gesture, a zooming gesture, and a cursor gesture. Various examples of these gestures will be given in a separate section below.

The gesture identification unit 18 is configured, as a result of said comparison, to identify, a valid hand gesture, and to generate a gesture signal 19 including information regarding the identified valid hand gesture, and also the position, and to apply the signal 19 to the CTC unit 4. The CTC unit 4 is then configured to determine an icon 20 related to the identified valid hand gesture, where the icon is one of a panning icon 22 (figure 2), a hovering icon 24 (figure 3), a zooming icon 26 and a cursor icon 28 (figure 4). These icons are easily distinguishable from each other. The CTC unit 4 is further configured to generate an icon control signal 30 including data related to the determined icon and to a position related to the identified valid hand gesture. The icon control signal 30 is applied to the at least one display panel 6 to display the determined icon on the CTC screen 8 at the position. More specifically, if the detected valid hand gesture is detected close to a mid-position of the sensory space the icon will be displayed in the middle of the screen. If instead the hand gesture is detected in a right or left portion of the sensory space the icon will be displayed at a right or left part of the screen, respectively.
The CTC unit 4 is configured to initiate interactive functionality related to the displayed icon, and this interactive functionality is active as long as the icon is displayed, which may be as long as the corresponding valid hand gesture is detected. The interactive functionality relates to the real-time traffic information displayed at the screen in connection to the displayed icon. It may be traffic information related to a selected item, or to a selected portion of the map.

According to one embodiment, the interactive functionality related to the panning icon 22 comprises to move the map 10 in relation to the screen in order to enable changing the part of the map being presented at the CTC screen. Thereby an improved overview is achieved of the parts of the map close to the border of the screen.

According to another embodiment, the hovering icon 24 has a boundary that highlights a part 32 of the map 10 within the boundary. The boundary may have a rectangular shape as illustrated in figure 3, which is practical as the map often is made up from rectangular shaped parts. Naturally, other shapes are possible, e.g. circular, elliptical, etc. The interactive functionality of the hovering icon 24 comprises, as a result of a detected grab gesture, grabbing, moving and dropping a copy of the highlighted part 32 of the map in a separate stacking area 34 of said screen 8. The separate stacking area 34 is shown in figure 5, which is a schematic illustration of the CTC screen. In figure 5, the stacking area is provided at the bottom of the screen, and is delimited from the remaining, and main, part of the screen where the map 10 is shown. The size and position of the stacking area may be altered and adjusted by the user (e.g. the dispatcher).

The stacking area 34 is generally applicable to receive and display copies of selected parts 32 of the map being grabbed and moved by a grab gesture, i.e. not only in relation to the hovering icon interactive functionality.
In the current CTC system, dispatchers are opening windows of detailed parts of the map on top of the current map, placing them all over the screen. The issue here is that dispatchers do not have clear visibility behind these open windows. The solution is to provide the stacking area 34 dedicated only for stacking windows with detailed information of the selected portion. The following steps are required to successfully accomplish the grab and drop feature:
1. Hover over the map with one hand while having all fingers extended, using the hovering gesture, and displaying the hovering icon, e.g. a rectangle enclosing a portion of the map.
2. Once hovered on top of a desired portion, use the grab gesture to select that portion.
3. Move the hand such that the hovering icon with the selected portion is moved to the stacking area.
4. Leave the window in the stacking area by extending all the fingers.

Newly stacked window is intended to be visible in parallel with the main map on the top of the screen. Inside that window, a zoomed map is also receiving real-time information from the rail infrastructure.

The stacking area has a hide/show feature, i.e. it is possible to choose not show the stacking area.

According to still another embodiment the interactive functionality to the zooming icon 26 comprises to zoom in or zoom out of the map 10, or of a part of the map, to display more or less detailed information, respectively. Thereby, another layer of information will be easily displayed which, upon zooming in, would enable easy request of detailed information.

According to another embodiment the interactive functionality to the cursor icon 28 comprises, as a result of a detected selection gesture, presenting interactive information related to a selected object of the map. The interactive information may be presented as e.g. a table having selectable items. These may be information of a train, a telephone number to a train operator, information of switches, etc.

In some occasions, it may be desirable to change the size of a presented icon. Therefore, according to another embodiment, the gesture-detecting device 12 is structured to detect and identify a changing size gesture resulting in that the size of a presented icon is enlarged or reduced in dependence of predefined parameters of the changing size gesture.

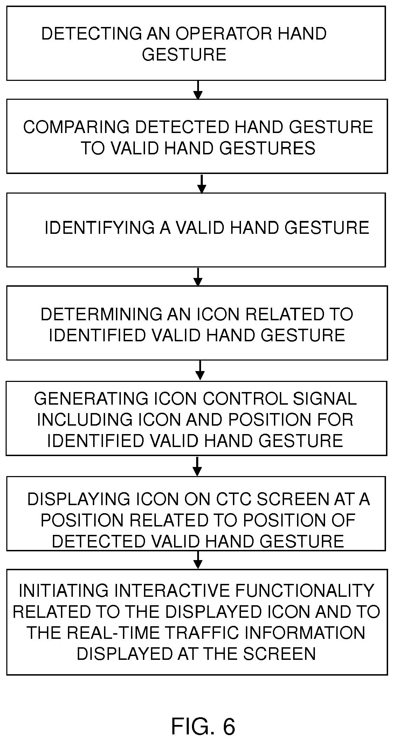

The present invention also relates to a method of interacting with a centralized traffic control (CTC) system. The method will now be described with references to the flow diagram shown in figure 6, but also to figures 1-5.

The CTC system 2 comprises a CTC unit 4 and at least one display panel 6 constituting a large CTC screen 8, configured to display an overview of traffic in a specified geographical area on a map 10 to an operator, wherein interactive real-time traffic information is displayed at the screen.
As discussed above, the CTC screen 8 needs to have a considerable size to give a required overview for the operator (dispatcher), the size is at least 220 inches (5.5 meters) diagonally.

The method comprises:
- Detecting an operator hand gesture, by a gesture detection device configured to detect operator hand gestures in a three dimensional (3D) sensory space provided in front of the CTC screen, and a gesture related position, the detected hand gesture being transformed to a data representation.
- Comparing, in a gesture identification unit, the data representation of the detected operator hand gesture to data representations of a set of valid hand gestures, wherein said valid hand gestures comprises a panning gesture, a hovering gesture, a zooming gesture, and a cursor gesture.
- Identifying, as a result of the comparison, in the gesture identification unit, a valid hand gesture.
- Determining an icon related to the identified valid hand gesture, wherein the icon is one of a panning icon, a hovering icon, a zooming icon and a cursor icon, and wherein the icons being easily distinguishable from each other.
- Generating an icon control signal including data related to the determined icon and to a position related to the identified valid hand gesture.
- Presenting the determined icon on the CTC screen at a position related to the detected valid hand gesture.
- Initiating, by the CTC control unit, interactive functionality related to the displayed icon and to the real-time traffic information displayed at the screen.

According to one embodiment, the interactive functionality to the panning icon 22 comprises moving the map 10 in relation to the screen in order to enable changing the part of the map being presented at the CTC screen.

According to another embodiment, the hovering icon 24 has a boundary that highlights a part 32 of the map 10 within the boundary, and that the interactive functionality of the hovering icon 24 comprises, as a result of a detected grab gesture, grabbing, moving and dropping a copy of the highlighted part 32 of the map in a separate stacking area 34 of the screen 8.

According to still another embodiment, the interactive functionality to the zooming icon 26 comprises zooming in or zooming out of the map 10, or-a part of the map, to display more or less detailed information, respectively. Thereby another layer of information will be displayed which, upon zooming in, would enable easy request of detailed information.

According to a further embodiment, the interactive functionality to the cursor icon 28 comprises, as a result of a detected selection gesture, presenting interactive information related to a selected map object.

In a further embodiment, the gesture detecting device 12 is structured to detect and identify a changing size gesture resulting in that the size of a presented icon is enlarged or reduced in dependence of predefined parameters of the changing size gesture.

The CTC screen preferably comprises a predefined stacking area 34 to receive and display copies of selected parts 32 of the map being grabbed and moved by a grab gesture. This embodiment is further discussed above with references to figure 5.

### The gesture detection device and gesture identification unit.

One example of a gesture detection device being applicable herein is a detection device from the company Leap Motion Inc. that brings the ability to perform accurate motion tracking of human hand(s), including fingers, as well as some basic objects (a pen). It determines the position of predefined objects in a limited space, above the detection device, in real time, using infrared (IR) technology. The device senses movements in the field as there is an inverted pyramid positioned in the centre of it.
More in detail, the detection device is a small USB peripheral device, which is designed to be placed on a physical desktop, facing upward. It can also be mounted onto a virtual reality headset. Using two monochromatic IR cameras and three infrared light emitting diodes (LEDs), the device observes a roughly hemispherical area, to a distance of about 1 meter. The LEDs generate pattern-less IR light and the cameras generate almost 200 frames per second of reflected data. This is then sent through a USB cable to a host computer, where it is analysed by software using complex algorithms to synthesize 3D position data by comparing the 2D frames generated by the two cameras. The overall average accuracy of the controller was shown to be 0.7 millimetre.

In published applications US-2014/0304665 and US-2014/0340524 various examples gesture detection devices are disclosed.

Apart from detecting precise position of a hand, fingers and objects, the detection device also has the capability to recognize gestures such as: swiping, rotating in circle, tapping etc.
The detection device, and also the gesture identification unit, is programmed through well-defined and documented API (Application Programming Interface) supporting various programming languages: Java, JavaScript, C++, Python etc. Real-time data that is transmitted from the gesture detection device to the CTC unit is accessed through the API. The position in the sensory space is expressed using Cartesian and spherical coordinate system.

Hand gestures are movements that humans make to express meaningful information to others. Movements that symbolize something and contain a message are called gestures that aim to convey information. Hand gestures can be separated in four different categories:
- Conversational gestures - expressive gestures while having a conversation with somebody.
- Controlling gestures - used in vision-based interfaces, applied in Human-Computer Interaction field,
- Manipulative gestures - remote robotic operations.
- Communicative gestures - sign language.

Apart from these categories, gestures can be recognized as static or dynamic.

A static gesture or static hand posture, does not have a time varying signal, therefore, its meaning can be distinguished from a single image. An example of static gesture is the STOP sign.
A dynamic gesture is a sequence of different postures followed by a motion, which is captured in a time frame. An example of dynamic gesture can be a "goodbye" gesture.

In the following, some gestures will be discussed in detail that have been determined to solve identified issues using the gesture detection device and the gesture identifying unit. These valid hand gestures include: panning, zooming and hovering, and a gesture for showing a cursor. Each is designed in a different way so that it is distinguishable, functional and that they feel as natural as possible to the user. A number of additional valid hand gestures has been discussed above, a grab gesture, a drop gesture, a changing size gesture, and a detected selection gesture.

### The panning gesture.

This gesture may be performed by using one hand with an index finger to activate the panning gesture. With an index finger extended only, moving the hand on top of the detection device is easy and feels natural, just like dragging a piece of puzzle on the desk (in this case a rail traffic map) and moving it around to the desired position. Panning feature is required to solve the usability issue explained in the background section, i.e. that a limited area is visible on the screen. The panning gesture may be a hand hovered above the detection device in the X and Y-axis and with an index finger extended only.

The intention is to use the whole map of the city area and not just a portion. The dispatchers cannot see any information that is close to the borders of their focus area. Therefore, the advantage of having this feature is that dispatchers have the ability to monitor upcoming events and can plan and act in advance to reduce potential risks.

### The zooming gesture

The solution that is proposed involves using both hands above the detection device with all fingers extended and stretching hands away to increase the size of the map. This gesture is the closest to the pinch-to-zoom gesture. It acts the same way as on smartphones with a different setting of interaction. Instead of fingers, the user uses hands, and instead of touching the screen, hands are hovering above the detection device.

The purpose of the zooming feature is to solve an issue described in the background section as hard to reach details of the map. Since the map on the eight display panels show limited information (signals), dispatchers need to make few steps in order to request for more information. Zooming the map will reveal another layer of information and would enable easy request of detailed information.

### The hovering gesture

One gesture used for the hovering gesture is to use all fingers and hovering with a hand above the detection device with the palm downwards. This gesture will activate and display the hovering icon which may be moved, i.e. be hovered, in relation to the map in response of the hand movement to be able to select a particular section of the map.

As an illustrating example, the following steps are required to request detailed portion, and to move it to the stacking area:
1. Hover on top of one section - using the hovering gesture.
2. Use a grab gesture to select the section.
3. Move the selected section to the stacking area.
4. Drop the selected section, by a dropping gesture, in the stacking area.

### The cursor gesture

According to one variation, this gesture involves using a pen (or any object that is longer, thinner, and straighter than a finger). A reason is that the user will have in mind that holding a pen might involve taking some action in the system (changing the state of an element - stopping the train from moving forward). An illustration of a cursor icon is shown in figure 4.

Thus, the cursor gesture may be implemented using a pen without the ability to take any actions when moving in the X-Y-plane - except for moving the icon cursor in relation to the map. A selection of a particular item may then be performed by moving the pen in the Z-direction against the screen. A menu may then be displayed opening up a plurality of selections.

The present invention is not limited to the above-described preferred embodiments. Various alternatives, modifications and equivalents may be used. Therefore, the above embodiments should not be taken as limiting the scope of the invention, which is defined by the appending claims.

## Claims

1. A centralized traffic control (CTC) system (2) comprising a CTC unit (4) and at least one display panel (6) constituting a large CTC screen (8), configured to display an overview of traffic in a specified geographical area on a map (10) to an operator, wherein interactive real-time traffic information is displayed at the screen,
**characterized in that** CTC system (2) comprises,
- a gesture detecting device (12) configured to detect operator hand (14) gestures and gesture related positions, in a three dimensional (3D) sensory space (16) provided in front of said CTC screen (8), the detected hand gesture and related position being transformed to a data representation,
- a gesture identification unit (18) configured to compare said data representation of said detected operator hand gesture to data representations of a set of valid hand gestures, wherein said set of valid hand gestures comprises a panning gesture, a hovering gesture, a zooming gesture, and a cursor gesture, wherein said gesture identification unit (18) is configured, as a result of said comparison, to identify a valid hand gesture,
- the CTC unit (4) is configured to determine an icon (20) related to the identified valid hand gesture, wherein the icon is one of a panning icon (22), a hovering icon (24), a zooming icon (26) and a cursor icon (28), and wherein said icons are easily distinguishable from each other, and to generate an icon control signal (30) including data related to said determined icon and to a position related to the identified valid hand gesture, wherein said icon control signal (30) is applied to said at least one display panel (6) to display said determined icon on said CTC screen (8) at a position related to the detected valid hand gesture, and wherein said CTC unit (4) is configured to initiate interactive functionality related to the displayed icon, and to the real-time traffic information displayed at the screen.

2. The CTC system (2) according to claim 1, wherein the interactive functionality to said panning icon (22) comprises to move the map (10) in relation to the screen in order to enable changing the part of the map being displayed at the CTC screen.

3. The CTC system (2) according to claim 1 or 2, wherein said hovering icon (24) has a boundary that highlights a part (32) of the map (10) within the boundary, and wherein the interactive functionality of said hovering icon (24) comprises, as a result of a detected grab gesture, grabbing, moving and dropping a copy of the highlighted part (32) of the map in a separate stacking area (34) of said screen (8).

4. The CTC system (2) according to any of claims 1-3, wherein said interactive functionality to said zooming icon (26) comprises to zoom in or zoom out of the map (10), or of a part of the map, to display more or less detailed information, respectively.

5. The CTC system (2) according to any of claims 1-4, wherein said interactive functionality to said cursor icon (28) comprises, as a result of a detected selection gesture, presenting interactive information (36) related to a selected map object.

6. The CTC system (2) according to any of claims 1-5, wherein the gesture detecting device (12) is structured to detect and identify a changing size gesture resulting in that the size of a presented cursor icon (28) is enlarged or reduced in dependence of predefined parameters of the changing size gesture.

7. The CTC system (2) according to any of claims 1-6, wherein the CTC screen comprises a predefined stacking area (34) to receive and display copies of selected parts (32) of the map being grabbed and moved by a grab gesture.

8. The CTC system (2) according to any of claims 1-7, wherein said large CTC screen (8) is at least 220 inch (5.5 metre) diagonally.

9. A method of interacting with a centralized traffic control (CTC) system (2) comprising a CTC unit (4) and at least one display panel (6) constituting a large CTC screen (8), configured to display an overview of traffic in a specified geographical area on a map (10) to an operator, wherein interactive real-time traffic information is displayed at the screen,
**characterized in that** method comprises,
- detecting an operator hand gesture, by a gesture detection device configured to detect operator hand gestures in a three dimensional (3D) sensory space provided in front of said CTC screen, and a gesture related position, the detected hand gesture being transformed to a data representation,
- comparing, in a gesture identification unit, said data representation of said detected operator hand gesture to data representations of a set of valid hand gestures, wherein said valid hand gestures comprises a panning gesture, a hovering gesture, a zooming gesture, and a cursor gesture,
- identifying, as a result of said comparison, in said gesture identification unit, a valid hand gesture,
- determining an icon related to the identified valid hand gesture, wherein the icon is one of a panning icon, a hovering icon, a zooming icon and a cursor icon, and wherein said icons being easily distinguishable from each other,
- generating an icon control signal including data related to said determined icon and to a position related to the identified valid hand gesture,
- displaying said determined icon on said CTC screen at a position related to the detected valid hand gesture,
- initiating, by said CTC control unit, interactive functionality related to the displayed icon and to the real-time traffic information displayed at the screen.

10. The method according to claim 9, wherein the interactive functionality to said panning icon (22) comprises moving the map (10) in relation to the screen in order to enable changing the part of the map being displayed at the CTC screen.

11. The method according to claim 9 or 10, wherein said hovering icon (24) has a boundary that highlights a part (32) of the map (10) within the boundary, and wherein the interactive functionality of said hovering icon (24) comprises, as a result of a detected grab gesture, grabbing, moving and dropping a copy of the highlighted part (32) of the map in a separate stacking area (34) of said screen (8).

12. The method according to any of claims 8-11, wherein said interactive functionality to said zooming icon (26) comprises zooming in or zooming out of the map (10), or of a part of the map, to display more or less detailed information, respectively.

13. The method according to any of claims 8-12, wherein said interactive functionality to said cursor icon (28) comprises, as a result of a detected selection gesture, presenting interactive information (36) related to a selected map object.

14. The method according to any of claims 8-13, wherein the gesture-detecting device (12) is structured to detect and identify a changing size gesture resulting in that the size of a presented cursor icon (28) is enlarged or reduced in dependence of predefined parameters of the changing size gesture.

15. The method according to any of claims 8-14, wherein the CTC screen comprises a predefined stacking area (34) to receive and display copies of selected parts (32) of the map being grabbed and moved thereto by a grab gesture.
